# EUROPÄISCHE PATENTSCHRIFT

(11) **EP 2 648 306 B1**
(45) Veröffentlichungstag und Bekanntmachung des Hinweises auf die Patenterteilung: **06.06.2018**
(21) Anmeldenummer: 13156504.6
(22) Anmeldetag: 25.02.2013
(51) Int. Cl.: H01F 38/14, H02J 5/00, H02J 50/10, H02J 50/60, H02J 50/70

(54) **Drahtlose Energieübertragung**
Wireless energy transfer
Transmission d'énergie sans fil

(30) Priorität: 05.04.2012 DE 102012205737
(43) Veröffentlichungstag der Anmeldung: 09.10.2013
(73) Patentinhaber: ROBERT BOSCH GMBH, 70442 Stuttgart (DE)
(72) Erfinder: Mack, Juergen, 73035 Goeppingen (DE)

(56) Entgegenhaltungen:
- WO-A1-2011/070637
- US-A1- 2010 244 578
- US-A1- 2010 244 582
- US-A1- 2012 043 932

## Beschreibung

Die Erfindung betrifft einen Sender zur drahtlosen Energieübertragung. Insbesondere betrifft die Erfindung eine induktive Energieübertragung zwischen einem Sender und einem Empfänger.

### Stand der Technik

Eine drahtlose Energieübertragung kann beispielsweise dazu verwendet werden, eine Batterie eines elektrischen Kleingeräts aufzuladen, ohne dafür eine elektromechanische Schnittstelle vorzusehen. Die Energieübertragung kann insbesondere induktiv erfolgen, indem ein Ladegerät als Sender ein magnetisches Wechselfeld bereitstellt und das Kleingerät als Empfänger Energie aus dem magnetischen Wechselfeld entnimmt. Beide Umwandlungen erfolgen vorzugsweise mittels Spulen, wobei seitens des Senders eine Sendespule und seitens des Empfängers eine Empfangsspule verwendet wird. Die Spulen sind durch ihre geometrische Auslegungen und gegebenenfalls mittels eines Kerns miteinander gekoppelt.

US 2010 244 578 A1 betrifft eine Vorrichtung zur drahtlosen Energieübertragung mittels eines elektromagnetischen Wechselfelds.

US 2012 0 229 140 A1 schlägt vor, mittels eines Aktuators die Ausrichtung eines magnetischen Materials im Bereich einer Senderspule zu verändern, um ein elektromagnetisches Wechselfeld der Resonanzspule an eine Empfängerspule anzupassen.

Um die Energieübertragung an die Bedürfnisse des Empfängers anzupassen, ist es bekannt, einen oder mehrere elektrische Parameter im Empfänger zu erfassen und an den Sender zu übermitteln, worauf dieser die Generierung des magnetischen Wechselfelds auf der Basis der empfangenen Parameter steuert. So kann beispielsweise auf eine über die Zeit veränderliche Leistungsaufnahme beim Laden eines Akkumulators eingegangen werden. Eine solche Steuerung umfasst eine Regelstrecke, die den Sender, den Empfänger und die Übertragungsstrecke umfasst und somit einer Vielzahl von Einflüssen ausgesetzt sein kann, welche eine der Komponenten betreffen.

Ein solcher Einflussfaktor kann insbesondere die Anwesenheit eines magnetisierbaren oder elektrisch leitfähigen Objekts im magnetischen Einflussbereich der Sendespule sein. Das Objekt wandelt durch Bildung von Wirbelströmen oder durch Umbau von Unmagnetisierungs- bzw. Hystereseverlusten einen Teil des magnetischen Felds in Wärme um und erhitzt sich. Dies ist unerwünscht, da so einerseits ein Teil der senderseitig aufgebrachten Energie empfängerseitig nicht zur Verfügung steht und andererseits die Erwärmung des Objekts mit einer Unfallgefahr verbunden sein kann.

Es ist Aufgabe der vorliegenden Erfindung, eine drahtlose Energieübertragung anzugeben, die eine verbesserte Steuerung eines zur Energieübertragung verwendeten magnetischen Felds bereitstellt. Die Erfindung löst diese Aufgabe mittels eines Senders und eines Verfahrens mit den Merkmalen der unabhängigen Ansprüche. Unteransprüche geben bevorzugte Ausführungsformen wieder.

### Offenbarung der Erfindung

Ein Sender zur drahtlosen Energieübertragung umfasst eine Sendespule, einen Generator zur Beaufschlagung der Sendespule mit einem elektrischen Wechselsignal und eine Steuereinrichtung zur Steuerung des Generators in Abhängigkeit eines elektrischen Parameters. Ferner ist eine Feldsonde zur Bereitstellung des elektrischen Parameters auf der Basis eines magnetischen Wechselfelds im Bereich der Sendespule vorgesehen.

Die Erzeugung des magnetischen Wechselfelds mittels des Generators und der Sendespule kann in Abhängigkeit des im Bereich der Sendespule herrschenden Magnetfelds gesteuert werden. Dadurch können Streueffekte des durch die Sendespule bereitgestellten magnetischen Felds reduziert sein. Außerdem kann aus einer Vielzahl von Arbeitspunkten, in denen der Sender bzw. die Sendespule betrieben werden kann, einer ausgewählt werden, der eine verringerte Erwärmung eines eventuell im Bereich der Sendespule vorhandenen Objekts bewirkt. Dadurch kann die Effizienz der Energieübertragung zu einem Empfänger verbessert werden. Außerdem kann eine Unfallgefahr, die durch das im magnetischen Wechselfeld erwärmte Objekt ausgehen kann, gesenkt werden.

Bevorzugterweise ist die Steuereinrichtung dazu eingerichtet, den Generator so zu steuern, dass eine Feldstärke oder eine Frequenz des magnetischen Wechselfelds minimiert wird, während eine vorbestimmte Energie in das magnetische Wechselfeld umgesetzt wird, wie im korrespondierenden Vorrichtungsanspruch genauer ausgeführt ist. Die erwähnten Arbeitspunkte können unterschiedliche Kombinationen mehrerer Parameter umfassen, die senderseitig kontrollierbar sind. Von mehreren möglichen Arbeitspunkten, die eine Übertragung der gleichen Energie erlauben, kann einer ausgewählt werden, der das magnetische Wechselfeld, also seine Flussdichte, verringert und so die Beeinflussung eines fremden Objekts verringert.

In einer bevorzugten Ausführungsform umfasst der Sender ferner eine Empfangseinrichtung zur Entgegennahme eines elektrischen Parameters eines Empfängers, der Energie aus dem magnetischen Wechselfeld der Sendespule entnimmt bzw. dazu eingerichtet ist, die Energie zu entnehmen, wobei die senderseitige Steuereinrichtung die umzusetzende Energie auf der Basis des entgegengenommenen Parameters bestimmt. Auf diese Weise kann der Sender mittels zweier verschachtelter Regelschleifen gesteuert werden, von denen die eine den Empfänger umfasst, so dass auf dessen Energiebedürfnis reagiert werden kann, die andere dazu eingerichtet ist, das durch den Sender bereitgestellte magnetische Feld unter Einhaltung der Regelbedingung der anderen Regelschleife zu verringern bzw. zu minimieren.

In einer Ausführungsform ist die Steuereinrichtung dazu eingerichtet, eine Frequenz des elektrischen Wechselsignals zu steuern. Dabei kann die Beeinflussung der Frequenz dazu verwendet werden, die Induktion bzw. das magnetische Feld zu steuern oder die Frequenz kann zusätzlich zur magnetischen Induktion gesteuert und dabei minimiert oder maximiert werden. Andererseits kann durch die Steuerung der Frequenz eine magnetische Störwirkung im Bereich der Sendespule gezielt beeinflusst werden. Ein Arbeitspunkt des Senders kann also beispielsweise durch eine Kombination einer Spannung, eines Stroms, einer Frequenz und einer magnetischen Induktion im Bereich der Sendespule definiert sein.

In einer bevorzugten Ausführungsform umfasst die Feldsonde eine Spule, vorzugsweise auf einem Kern, insbesondere einem ferromagnetischen Ringkern. Durch die Spule kann auf einfache Weise eine Spannung generiert werden, die proportional zu der Stärke der Induktion im Bereich der Sendespule ist. Dieses Messprinzip kann deutlich schneller und weniger fehleranfällig als beispielsweise eine Temperaturmessung im Bereich der Sendespule sein. Der Kern kann dazu beitragen, den störenden Einfluss eines elektrischen Feldes im Bereich der Sendespule zu reduzieren. Die Bestimmung des magnetischen Feldes kann so in verbesserter Genauigkeit erfolgen. Durch die Ringform kann die Sensitivität der Feldsonde zur Bestimmung eines gerichteten Magnetfelds im Bereich der Sendespule genutzt werden.

Bevorzugterweise ist die Sendespule integriert mit der Feldsonde ausgeführt. So kann eine separat handhabbare Einheit entstehen, die verbessert hergestellt und leichter montiert werden kann.

Die Feldsonde kann auch einen Hallsensor umfassen. In weiteren Ausführungsformen kann die Feldsonde auch einen anderen Magnetfeldsensor, beispielsweise auf Basis des anisotropischen Effekts, umfassen. Dadurch kann der Einsatz eines gekapselten, industriell herstellbaren Magnetfeldsensors unterstützt sein.

In einer Ausführungsform umfasst die Sendespule eine Wicklung mit einem Kern, insbesondere einem Topf-Kern oder Scheibenkern, wobei der Kern eine dedizierte Aussparung zur Aufnahme der Feldsonde aufweist. In einer Ausführungsform umfasst die Sendespule eine Wicklung auf dem Kern, und die Feldsonde umfasst eine zusätzliche Wicklung auf dem selben Kern. In einer anderen Ausführungsform sind die Wicklung der Sendespule und die Feldsonde an unterschiedlichen Stellen des Kerns angeordnet.

Ein Verfahren zur Steuerung des oben beschriebenen Senders zur drahtlosen Energieübertragung umfasst Schritte des Erfassens eines elektrischen Parameters, der vom magnetischen Wechselfeld im Bereich der Sendespule abhängig ist, und des Steuerns des Generators in Abhängigkeit des Parameters wie im korrespondierenden Verfahrensanspruch genauer ausgeführt ist.

Das Verfahren kann leicht durch eine elektrotechnische Vorrichtung umsetzbar sein, die in einer Ausführungsform durch einen programmierbaren Mikrocomputer steuerbar sein kann.

Ein Computerprogrammprodukt umfasst Programmcodemittel zur Durchführung des beschriebenen Verfahrens, wenn das Computerprogrammprodukt auf einer Verarbeitungseinrichtung abläuft oder auf einem computerlesbaren Datenträger gespeichert ist. Die Verarbeitungseinrichtung kann einen programmierbaren Mikrocomputer, insbesondere eine integrierte, programmierbare elektronische Steuerung, umfassen.

### Kurze Beschreibung der Figuren

Die Erfindung wird nun mit Bezug auf die beigefügten Figuren genauer beschrieben, in denen:
- Fig. 1: einen schematischen Schaltplan eines Systems zur drahtlosen Energieübertragung;
- Fig. 2: einen Feldsensor zur Bestimmung des Magnetfelds im System aus Fig. 1;
- Fig. 3: Anordnungen von Feldsensoren an der Sendespule des Systems auf Fig. 1, und
- Fig. 4: ein Ablaufdiagramm eines Verfahrens zur Steuerung des Systems aus Fig. 1

### darstellt.

### Genaue Beschreibung von Ausführungsbeispielen

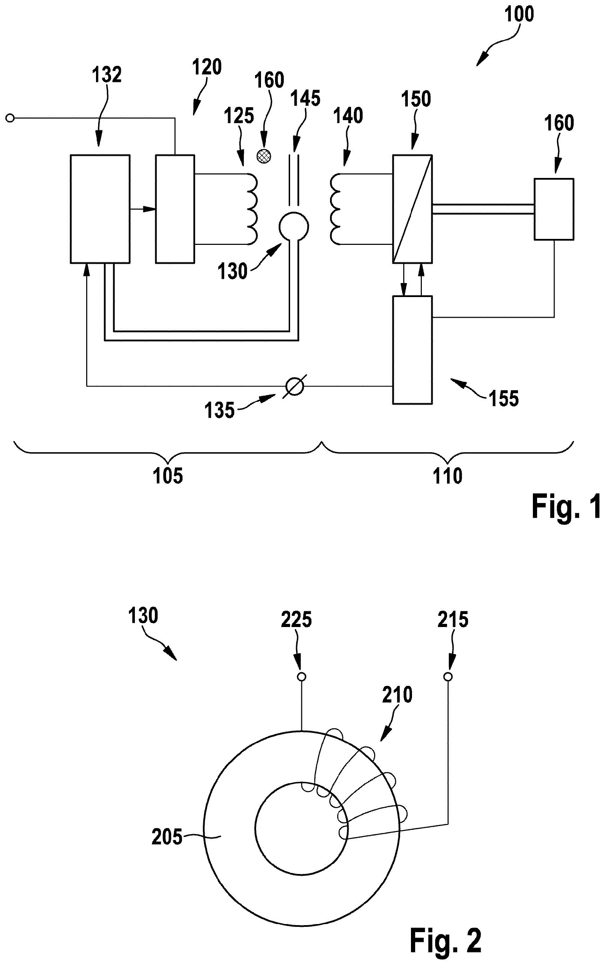

Fig. 1 zeigt einen schematischen Schaltplan eines Systems 100 zur drahtlosen Energieübertragung. Das System 100 umfasst einen Sender 105 und einen Empfänger 110.

Der Sender 105 umfasst eine Sendespule 125 zur Erzeugung eines magnetischen Feldes. Die Sendespule 125 ist mit einem Generator 120 zur Bereitstellung eines elektrischen Wechselsignals verbunden, um das magnetische Feld der Sendespule 125 als magnetisches Wechselfeld zu realisieren. Eine Einrich tung zur Versorgung des Generators 120 mit einer geeigneten Spannung ist an sich bekannt und in Fig. 1 nicht explizit dargestellt. Eine senderseitige Steuereinrichtung 132 ist dazu eingerichtet, den Generator 120 zu steuern und mit einer Feldsonde 130 und einer Schnittstelle 135 verbunden. Die Feldsonde 130 befindet sich im Bereich der Sendespule 125 und ist so angeordnet, dass ein Ausgangssignal der Feldsonde 130 von einem Magnetfeld abhängig ist, das durch die Sendespule 125 generiert ist. Vorzugsweise ist das Ausgangssignal der Feldsonde 130 direkt proportional zum magnetischen Fluss des durch die Sendespule 125 bereitgestellten magnetischen Feldes. Die optionale Schnittstelle 135 dient zur Übermittlung von Nachrichten vom Empfänger 110 zum Sender 105. Bevorzugterweise ist die Schnittstelle 135 drahtlos ausgeführt, beispielsweise auf induktivem Weg oder mittels elektromagnetischer Kopplung zwischen dem Empfänger 110 und dem Sender 105.

Der Empfänger 110 umfasst eine Empfangsspule 140, die magnetisch mit der Sendespule 125 des Senders 105 koppelbar ist, wenn der Empfänger 110 im Bereich des Senders 105 angeordnet ist. Bevorzugterweise ist ein Kern 145 vorgesehen, um die Sendespule 125 und die Empfangsspule 140 verbessert miteinander zu koppeln. Der Kern 145 kann zweigeteilt sein, wobei ein Teil der Senderspule 145 und der andere der Empfangsspule 140 zugeordnet ist. Die Empfangsspule 140 ist in der dargestellten Ausführungsform mit einem Spannungswandler 150 verbunden, der durch eine Steuereinrichtung 155 steuerbar ist. Ein Ausgang des Spannungswandlers 150 ist mit einem Verbraucher 160 verbunden, wobei vorzugsweise auch die Steuereinrichtung 155 mit dem Verbraucher 160 verbunden ist, um eine Aufnahme von Parametern zu erlauben, die unmittelbar auf den Verbraucher 160 bezogen sind. Schließlich ist die Steuereinrichtung 155 optional mit der Schnittstelle 135 verbunden, um einen Parameter oder eine Nachricht vom Empfänger 110 an den Sender 105 übermitteln zu können.

In manchen Ausführungsformen der Erfindung sind nicht alle in Fig. 1 dargestellten Elemente unbedingt vorhanden. Insbesondere kann die Schnittstelle 135 entfallen und der Aufbau des Empfängers 110 kann auch anders als dargestellt erfolgen. Ein üblicher Empfänger 110 zur induktiven Energieaufnahme kann ohne Änderungen am beschriebenen Sender 105 betreibbar sein.

Die senderseitige Steuereinrichtung 132 ist dazu eingerichtet, den Generator 120 zu steuern, um das durch die Sendespule 132 bereitgestellte magnetische Feld zu beeinflussen. Dabei können einer oder mehrere elektrische Parameter an der Sendespule 125 beeinflusst werden, insbesondere ein Strom, eine Spannung, eine Frequenz oder eine Signalform. Dabei erfolgt die Steuerung des Generators 120 in Abhängigkeit eines Signals, das durch die Feldsonde 130 bereitgestellt ist. Die Steuereinrichtung 132 ist dazu eingerichtet, wenigstens einen der elektrischen Parameter an der Sendespule 125 so zu beeinflussen, dass das Ausgangssignal der Feldsonde 130 verringert ist. Dadurch wird auch das durch die Sendespule 125 bereitgestellte Magnetfeld verändert. Bevorzugterweise erfolgt diese Steuerung auf eine Weise, welche die von der Sendespule 125 zur Empfangsspule 140 übertragene Energie in ihrem Betrag nicht beeinflusst. Der Betrag kann vorbestimmt oder mittels der Schnittstelle 135 vom Empfänger 110 an den Sender 105 übermittelbar sein.

Ein Objekt 160, das sich beispielsweise ungewollt oder unbemerkt im Bereich der Sendespule 125 befindet, ist dem Magnetfeld der Sendespule 125 ausgesetzt und kann sich, wenn es elektrisch leitfähig ist, aufgrund von induzierten Wirbelströmen erhitzen. Ist das Objekt 160 magnetisierbar, so kann eine Erwärmung auch durch Unmagnetisierungs- oder Hystereseverluste erfolgen. Diese Erwärmung ist abhängig von der Stärke des durch die Sendespule 125 bereitgestellten Magnetfelds.

Die zwischen den Spulen 125, 140 übermittelte Energie ist abhängig von einer Amplitude, einer Freuquenz und einer Signalform des bereitgestellten Magnetfelds. Unterschiedliche Kombinationen von Werten für diese Faktoren können die gleiche Energieübertragung gewährleisten. Um die Erwärmung des Objekts 160 bei gleicher Energieübertragung zu minimieren, ist es vorteilhaft, die Amplitude des Magnetfelds zu minimieren. Alternativ kann auch eine maximale Änderungsgeschwindigkeit des Magnetfelds verringert werden.

Die beschriebene Regelung kann eingebunden sein in einen zweiten Regelkreis, der sicherstellt, dass eine ausreichende bzw. die gerade erforderliche Energiemenge für den Empfänger 110 durch den Sender 105 bereitgestellt wird. Dazu stellt die empfängerseitige Steuereinrichtung 155 über die Schnittstelle 135 der senderseitigen Steuereinrichtung 132 ein Signal bereit, das auf den Energiebe darf hinweist. Die Steuereinrichtung 132 stellt dann die elektrischen Parameter an der Sendespule 125 mittels des Generators 120 so ein, dass die geforderte Energie übertragen wird, während gleichzeitig die Stärke des Magnetfelds oder dessen Frequenz an der Sendespule 125 verringert bzw. minimiert ist. Bevorzugterweise stellt die empfängerseitige Steuereinrichtung 155 dieses Signal an der Schnittstelle 135 auf der Basis eines oder mehrerer empfängerseitiger Parameter bereit. Umfasst der Verbraucher 160 beispielsweise eine Batterie, so kann die Steuereinrichtung 155 den Spannungswandler 150 so steuern, dass über die Schnittstelle 135 ein entsprechendes, auf den Energiebedarf hinweisendes Signal bereit gestellt ist und durch den Verbraucher 160 ein konstanter Strom fließt. Umfasst der Verbraucher 160 in einem anderen Beispiel eine rein ohmsche Last, beispielsweise eine Glühlampe oder ein elektrisches Heizelement, so kann die am Verbraucher 160 anliegende Spannung durch die Steuereinrichtung 155 auf einen konstanten Wert gesteuert werden, wobei das an der Schnittstelle 135 bereitgestellte Signal wieder den Energiebedarf reflektiert.

Fig. 2 zeigt einen Feldsensor 130 in einer Ausführungsform zur Bestimmung des Magnetfelds an der Sendespule 125 im System 100 aus Fig. 1. Die Feldsonde 130 umfasst einen Kern 205 mit einer Wicklung 210. Enden der Wicklung 210 sind in Form von Anschlüssen 215 herausgeführt. Wird die Feldsonde 130 in ein Magnetfeld eingetaucht, so wird in der Wicklung 210 eine Spannung induziert, die an den Anschlüssen 215 abgreifbar ist und die in ihrem Betrag auf die Stärke des Magnetfelds hinweist. Bevorzugterweise ist der Kern 205 ringförmig und die Wicklung 210 umläuft den Kern 205 torusförmig. Durch den Einsatz des Kerns 205 kann eine Einstreuung eines elektrischen Feldes in das an den Anschlüssen 215 abgreifbare Signal vermieden werden. Bevorzugterweise ist der Kern 205 ferromagnetisch.

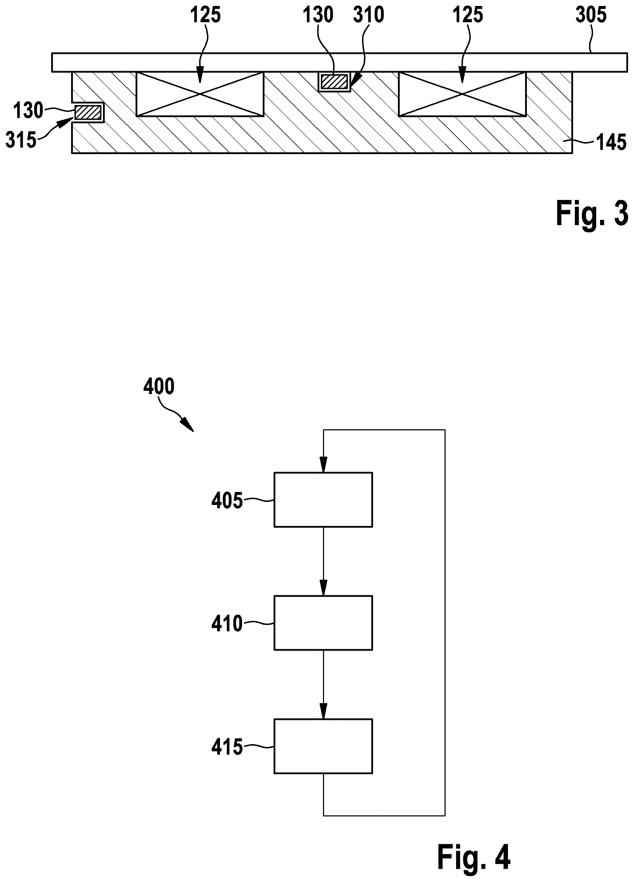

Fig. 3 zeigt unterschiedliche Anordnungen von Feldsensoren 130 an der Sendespule 125 des Systems 100 aus Fig. 1. Die Darstellung entspricht einem schematischen Längsschnitt durch die Sendespule 125 aus Fig. 1. Im Bereich einer Gehäusewand 305 des Senders 105 ist der Kern 145 angeordnet. Der Kern 145 trägt in der dargestellten Ausführungsform eine ringförmige Vertiefung, in welche die Sendespule 125 eingelassen ist. Der Empfänger 110 aus Fig. 1 kann in Fig. 3 oberhalb der Gehäusewand 305 angeordnet werden. Innerhalb des Empfängers 110 kann ein weiterer Kern 145 angeordnet sein. Ein Aufbau der Empfangsspule 140 kann dem Aufbau der Sendespule 125 entsprechen.

In der dargestellten, bevorzugten Ausführungsform weist der Kern 145 zwei unterschiedliche, dedizierte Aussparungen 310 und 315 auf. Die Aussparungen 310 und 315 sind als alternativ zu verstehen. Sie sind dazu eingerichtet, einen Feldsensor 130 aufzunehmen, wie er beispielsweise in Fig. 2 dargestellt ist. Es muss jedoch nicht die in Fig. 2 dargestellte Ausführungsform verwendet werden, es kann auch ein integrierter Magnetfeldsensor, beispielsweise auf der Basis des Hall- oder anisotropischen Effekts eingesetzt werden. In den Aussparungen 310 bzw. 315 liegen die Feldsonden 130 bevorzugterweise in einer Ebene, die senkrecht zur Mittelachse durch die Sendespule 125 verläuft. Die Aussparung 310 wird von Wicklungen der Sendespule 125 umlaufen, während die Aussparung 315 außerhalb der Wicklungen der Sendespule 125 liegt.

In einer anderen Ausführungsform ist die Feldsonde 130 als Spule realisiert, die in der gleichen Aussparung wie die Sendespule 125 liegt.

Fig. 4 zeigt ein schematisches Ablaufdiagramm eines Verfahrens 400 zur Steuerung des Systems 100 aus Fig. 1. In einem Schritt 405 wird ein Magnetfeld im Bereich der Sendespule 125 bestimmt. Optional wird zuvor oder anschließend in einem Schritt 410 eine Energie bestimmt, die vom Sender 105 zum Empfänger 110 übertragen werden soll bzw. die durch die Sendespule 125 von elektrischer Energie in magnetische Energie umzusetzen ist. In einem folgenden Schritt 415 wird der Generator 120 dazu angesteuert, der Sendespule 125 ein elektrisches Wechselsignal derart bereitzustellen, dass das im Schritt 405 bestimmte Signal darauf hinweist, dass das durch die Sendespule 125 bereitgestellte Magnetfeld verringert bzw. minimiert ist.

Wird gleichzeitig eine Steuerung auf die im Schritt 410 bestimmte, zu übertragende Leistung bzw. Energie durchgeführt, so erfolgt die Ansteuerung der Sendespule 125 im Schritt 415 unter Berücksichtigung dieser Randbedingung. Die Einflussnahme der Steuereinrichtung 132 auf die mittels der Sendespule 125 übertragene bzw. umgesetzte Energie erfolgt durch Beeinflussung eines oder mehrerer elektrischer Parameter an der Sendespule 125, die zusammen einen Arbeitspunkt der Sendespule 125 definieren. Diese Parameter können insbeson dere einen Strom, eine Spannung, eine Frequenz oder eine Signalform an der Sendespule 125 umfassen.

## Patentansprüche

1. Sender (105) zur drahtlosen Energieübertragung, umfassend:
- eine Sendespule (125);
- einen Generator (120) zur Beaufschlagung der Sendespule (125) mit einem elektrischen Wechselsignal;
- eine Steuereinrichtung (132) zur Steuerung des Generators (120) in Abhängigkeit eines elektrischen Parameters,
- eine Feldsonde (130) zur Bereitstellung des elektrischen Parameters auf der Basis eines magnetischen Wechselfelds im Bereich der Sendespule (125);
- wobei ein Arbeitspunkt, in dem die Sendespule betrieben werden kann, durch eine Kombination einer Spannung, eines Stroms, einer Frequenz und einer magnetischen Induktion im Bereich der Sendespule (125) definiert ist;
**dadurch gekennzeichnet, dass**
- die Steuereinrichtung (132) dazu eingerichtet ist, aus einer Vielzahl von Arbeitspunkten, die eine Übertragung einer vorbestimmten Energie erlauben, einen auszuwählen, bei dem die Feldstärke im Bereich der Sendespule (125) minimiert ist, und den Generator (120) in diesem Arbeitspunkt zu steuern.

2. Sender (105) nach Anspruch 1, ferner umfassend eine Empfangseinrichtung (135) zur Entgegennahme eines elektrischen Parameters eines Empfängers (110), der Energie aus dem magnetischen Wechselfeld der Sendespule (125) entnimmt, wobei die Steuereinrichtung (132) dazu eingerichtet ist, die umzusetzende Energie auf der Basis des entgegen genommenen Parameters zu bestimmen.

3. Sender (105) nach einem der vorangehenden Ansprüche, wobei die Steuereinrichtung (132) dazu eingerichtet ist, eine Frequenz des elektrischen Wechselsignals zu steuern.

4. Sender (105) nach einem der vorangehenden Ansprüche, wobei die Feldsonde (130) eine Spule (210) auf einem ferromagnetischen Ringkern (205) umfasst.

5. Sender (105) nach einem der vorangehenden Ansprüche, wobei die Sendespule (125) integriert mit der Feldsonde (130) ausgeführt ist.

6. Sender (105) nach einem der vorangehenden Ansprüche, wobei die Feldsonde (130) einen Hallsensor umfasst.

7. Sender (105) nach einem der vorangehenden Ansprüche, wobei die Sendespule (125) eine Wicklung mit einem Kern (145) umfasst, wobei der Kern (145) eine dedizierte Aussparung (310, 315) zur Aufnahme der Feldsonde (130) aufweist.

8. Verfahren (400) zur Steuerung eines Senders (105) zur drahtlosen Energieübertragung nach einem der vorangehenden Ansprüche, folgende Schritte umfassend:
- Erfassen (405) eines elektrischen Parameters, der vom magnetischen Wechselfeld im Bereich der Sendespule (125) abhängig ist, und
- Steuern (415) des Generators (120) in Abhängigkeit des Parameters;
- wobei ein Arbeitspunkt, in dem die Sendespule (125) betrieben werden kann, durch eine Kombination einer Spannung, eines Stroms, einer Frequenz und einer magnetischen Induktion im Bereich der Sendespule (125) definiert ist;
- und das Steuern (415) ein Auswählen eines Arbeitspunkts, bei dem die Feldstärke im Bereich der Sendespule (125) minimiert ist, aus einer Vielzahl von Arbeitspunkten, die eine Übertragung einer vorbestimmten Energie erlauben, umfasst.

9. Computerprogrammprodukt mit Programmcodemitteln zur Durchführung des Verfahrens (400) nach Anspruch 8, wenn das Computerprogrammprodukt auf einer Verarbeitungseinrichtung abläuft oder auf einem computerlesbaren Datenträger gespeichert ist.

## Claims

1. Transmitter (105) for wirelessly transmitting energy, comprising:
- a transmitting coil (125);
- a generator (120) for applying an electrical alternating signal to the transmitting coil (125);
- a control device (132) for controlling the generator (120) on the basis of an electrical parameter;
- a field probe (130) for providing the electrical parameter on the basis of an alternating magnetic field in the region of the transmitting coil (125);
- wherein an operating point at which the transmitting coil can be operated is defined by a combination of a voltage, a current, a frequency and magnetic induction in the region of the transmitting coil (125);
**characterized in that**
- the control device (132) is set up to select an operating point at which the field strength is minimized in the region of the transmitting coil (125) from a multiplicity of operating points which allow predetermined energy to be transmitted and to control the generator (120) at this operating point.

2. Transmitter (105) according to Claim 1, also comprising a receiving device (135) for receiving an electrical parameter of a receiver (110) which takes energy from the alternating magnetic field of the transmitting coil (125), wherein the control device (132) is set up to determine the energy to be converted on the basis of the received parameter.

3. Transmitter (105) according to one of the preceding claims, wherein the control device (132) is set up to control a frequency of the electrical alternating signal.

4. Transmitter (105) according to one of the preceding claims, wherein the field probe (130) comprises a coil (210) on a ferromagnetic toroidal core (205).

5. Transmitter (105) according to one of the preceding claims, wherein the transmitting coil (125) is integrated with the field probe (130).

6. Transmitter (105) according to one of the preceding claims, wherein the field probe (130) comprises a Hall sensor.

7. Transmitter (105) according to one of the preceding claims, wherein the transmitting coil (125) comprises a winding having a core (145), wherein the core (145) has a dedicated recess (310, 315) for accommodating the field probe (130).

8. Method (400) for controlling a transmitter (105) for wirelessly transmitting energy according to one of the preceding claims, comprising the following steps of:
- capturing (405) an electrical parameter which is dependent on the alternating magnetic field in the region of the transmitting coil (125), and
- controlling (415) the generator (120) on the basis of the parameter;
- wherein an operating point at which the transmitting coil (125) can be operated is defined by a combination of a voltage, a current, a frequency and magnetic induction in the region of the transmitting coil (125);
- and the controlling operation (415) comprises selecting an operating point at which the field strength is minimized in the region of the transmitting coil (125) from a multiplicity of operating points which allow predetermined energy to be transmitted.

9. Computer program product having program code means for carrying out the method (400) according to Claim 8 when the computer program product runs on a processing device or is stored on a computer-readable data storage medium.

## Revendications

1. Émetteur (105) pour la transmission d'énergie sans fil, comprenant :
- une bobine d'émission (125) ;
- un générateur (120) destiné à appliquer un signal électrique alternatif à la bobine d'émission (125) ;
- un dispositif de commande (132) destiné à commander le générateur (120) en fonction d'un paramètre électrique,
- une sonde de champ (130) destinée à fournir le paramètre électrique sur la base d'un champ magnétique alternatif dans la région de la bobine d'émission (125) ;
- dans lequel un point de fonctionnement auquel la bobine d'émission peut être mise en fonctionnement est défini par une combinaison d'une tension, d'un courant, d'une fréquence et d'une induction magnétique dans la région de la bobine d'émission (125) ;
**caractérisé en ce que**
- le dispositif de commande (132) est adapté pour sélectionner un point de fonctionnement auquel l'intensité de champ dans la région de la bobine d'émission (125) est minimisée, parmi une pluralité de points de fonctionnement permettant la transmission d'une énergie prédéterminée, et pour commander le générateur (120) à ce point de fonctionnement.

2. Émetteur (105) selon la revendication 1, comprenant en outre un dispositif de réception (135) destiné à prélever un paramètre électrique d'un récepteur (110) qui prélève de l'énergie à partir du champ magnétique alternatif de la bobine d'émission (125), dans lequel le dispositif de commande (132) est adapté pour déterminer l'énergie devant être convertie sur la base du paramètre prélevé.

3. Émetteur (105) selon l'une des revendications précédentes, dans lequel le dispositif de commande (132) est adapté pour commander une fréquence du signal électrique alternatif.

4. Émetteur (105) selon l'une des revendications précédentes, dans lequel la sonde de champ (130) comprend une bobine (210) sur un noyau ferromagnétique annulaire (205).

5. Émetteur (105) selon l'une des revendications précédentes, dans lequel la bobine d'émission (125) est intégrée à la sonde de champ (130).

6. Émetteur (105) selon l'une des revendications précédentes, dans lequel la sonde de champ (130) comprend un capteur à effet Hall.

7. Émetteur (105) selon l'une des revendications précédentes, dans lequel la bobine d'émission (125) comprend un enroulement comportant un noyau (145), dans lequel le noyau (145) comporte un évidement dédié (310, 315) destiné à recevoir la sonde de champ (130).

8. Procédé (400) de commande d'un émetteur (105) pour la transmission d'énergie sans fil selon l'une des revendications précédentes, comprenant les étapes consistant à :
- détecter (405) un paramètre électrique dépendant du champ magnétique alternatif dans la région de la bobine d'émission (125), et
- commander (415) le générateur (120) en fonction du paramètre ;
- dans lequel un point de fonctionnement auquel la bobine d'émission (125) peut être mise en fonctionnement est défini par une combinaison d'une tension, d'un courant, d'une fréquence et d'une induction magnétique dans la région de la bobine d'émission (125) ; et
- commander (415) une sélection d'un point de fonctionnement auquel l'intensité de champ dans la région de la bobine d'émission (125) est minimisée, parmi une pluralité de points de fonctionnement permettant la transmission d'une énergie prédéterminée.

9. Produit de programme d'ordinateur comportant des moyens à code de programme destinés à mettre en oeuvre le procédé (400) selon la revendication 8 lorsque le produit de programme d'ordinateur est exécuté sur un dispositif de traitement ou est stocké sur un support de données lisible par ordinateur.
